# EUROPEAN PATENT SPECIFICATION

(11) **EP 2 173 554 B1**
(45) Date of publication and mention of the grant of the patent: **19.08.2015**
(21) Application number: 08772061.1
(22) Date of filing: 26.06.2008
(51) Int. Cl.: B32B 27/18, B32B 27/36, B64C 1/14

(54) **A WINDOW SHADE AND A MULTI-LAYERED ARTICLE, AND METHODS OF MAKING THE SAME**
FENSTERBLENDE UND MEHRLAGIGER ARTIKEL SOWIE HERSTELLUNGSVERFAHREN DAFÜR
OMBRAGE DE FENÊTRE ET ARTICLE MULTICOUCHE, ET PROCÉDÉS DE FABRICATION DE CEUX-CI

(30) Priority: 09.07.2007 US 774749
(43) Date of publication of application: 14.04.2010
(73) Proprietor: SABIC Innovative Plastics IP B.V., 4612 PX Bergen op Zoom (NL)
(72) Inventor: DONEA, Constantin, Evansville, Indiana 47712 (US); RANADE, Ajit, Evansville, Indiana 47712 (US)
(74) Representative: Carpintero Lopez, Francisco
(86) International application number: PCT/US2008/068385
(87) International publication number: WO 2009/009308

(56) References cited:
- EP-A- 0 447 952
- WO-A-01/53398
- WO-A-2007/024456
- US-A1- 2006 078 743

## Description

### BACKGROUND

The cabin of an aircraft generally comprises windows that allow light into the cabin and allow passengers to view out of the cabin. These windows are generally equipped with window shades that, when engaged (e.g., pulled down over the window), can block light transmission into the aircraft cabin. For example, the window shades can include a shade material that has uniform light transmission capabilities, e.g., the window shade can be made of a material that is opaque (i.e., no light is transmitted through the window shade). Various processes have been employed to form aircraft window shades, which can be expensive, time consuming, and the like.

In addition, flammability safety standards for materials used in the interiors of airplane cabins are continually updated, as evidenced by amendments to 14 C.F.R. pt. 25 (1988), whereby additional tests, such as the smoke density test, were added. (See, 53 Federal Register 32564 (August 25, 1988)). In that test, the smoke emissions characteristics of cabin materials is tested according to American Society of Testing and Materials (ASTM) Standard Test Method ASTM F814-83. Meeting these standards continues to be a challenge for the industry.

What are needed in the art are aircraft window shades that meet federal regulations requirements, are opaque and cosmetically compatible with the interior of the aircraft cabin, as well as processes for making such window shades.

### SUMMARY

Disclosed herein are multilayer articles and methods for making the same.

In one embodiment, a multilayer article comprises: a core layer comprising a core layer polycarbonate resin, a core flame retardant additive, and optionally an opacity additive, and a cap layer comprising a cap layer polycarbonate resin and a cap flame retardant additive. The core layer comprises a sufficient amount of core flame retardant additive and the cap layer comprises a sufficient amount of cap flame retardant additive such that the multilayer article can pass a smoke density test as set forth in FAR 25.5, Appendix F, Part V, wherein the core flame retardant additive and the cap flame retardant additive comprise a non-brominated flame retardant.

In one embodiment, a method of making a multilayer article comprises: forming a core layer comprising a core layer thermoplastic resin, and a core non-brominated flame retardant additive; forming a cap layer comprising a cap layer thermoplastic resin, a cap non-brominated flame retardant additive; and thermoforming the multi-layer film. The core layer comprises a sufficient amount of core flame retardant additive and the cap layer comprises a sufficient amount of cap flame retardant additive, such that the multilayer article can pass a smoke density test as set forth in FAR 25.5, Appendix F, Part V, wherein the core flame retardant additive and the cap flame retardant additive comprise a non-brominated flame retardant.

The above-described and other features will be appreciated and understood by those skilled in the art from the following detailed description, drawings, and appended claims.

### BRIEF DESCRIPTION OF THE DRAWINGS

Referring now to the figures, which are exemplary embodiments, and wherein the like elements are numbered alike:
Figure 1 is a cross sectional view of an embodiment of an aircraft window shade;
Figure 2 is a schematic view of an embodiment of an extrusion system for making a multi-layered film used in an aircraft window shade; and
Figure 3 is a schematic view of an embodiment of a lamination system for making a multi-layered film used in an aircraft window shade.

### DETAILED DESCRIPTION

Disclosed herein are multi-layer films, which can be employed, for example, in window shades, more particularly aircraft window shades. While reference is made to an aircraft window shade throughout this disclosure, it is to be understood by those skilled in the art that the multi-layer film disclosed herein can be employed as a window shade in other applications (e.g., trains, buses, ships, residential and commercial buildings, and the like), as well as in a variety of other articles (e.g., wall panels, and the like).

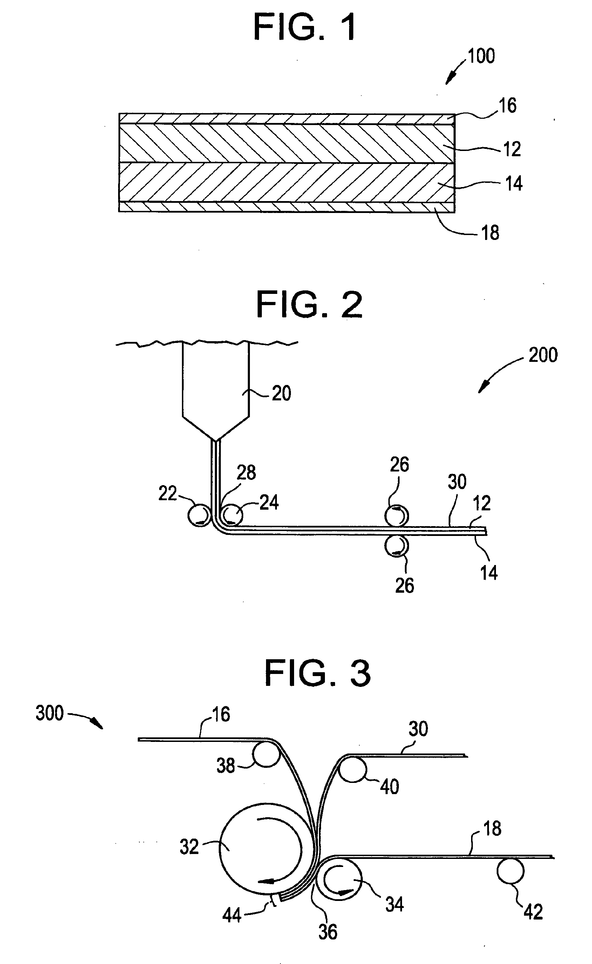

Referring now to Figure 1, a cross sectional view of an aircraft window shade, generally designated 100, is illustrated. The window shade 100 can comprise a first layer (core layer) 12, which can render the window shade opaque; and a second layer (cap layer) 14, which can cover (hide) the core layer 12, e.g., for aesthetic purposes. The core layer 12 can be disposed in physical communication with the cap layer 14. Furthermore, the window shade 100 can further comprise additional layers (e.g., third layer 16 and/or forth layer 18) depending on the desired application (e.g., the desired aesthetic appearance of aircraft cabin interior, and the like). Moreover, it is generally noted that the overall size, shape, thickness, opacity, and the like, of window shade 100 can vary depending on the desired application. With regards to the opacity of the window shade 100, it is briefly noted that end user specifications (e.g., commercial airline specifications) generally specify that the window shade 100 is opaque. However, it is to be understood that some end users may not demand an opaque window shade 100. As such, embodiments are envisioned wherein the window shade can have some light transmission therethrough. For example, the window shade can have a light transmission of 0% to about 50%, more particularly 0% to about 10% as measured by American Society for Testing and Materials (ASTM) D1003-00, Procedure B measured with instrument Macbeth 7000A, D65 illuminant, 10° observer, CIE (Commission Internationale de L'Eclairage) (1931), and SCI (specular component included), and UVEXC (i.e., the UV component is excluded).

Core layer 12 can comprise an extrudable thermoplastic composition that is compatible with the cap layer 14, and optionally compatible with any optional layer (e.g., third layer 16) disposed in physical communication with the core layer 12. More particularly, core layer 12 can comprise a thermoplastic resin, an opacity additive (e.g., a colorant (such as a dye, pigment, and the like), filler, and/or the like), a flame retardant, and optionally, various other additives.

With regards to the thermoplastic resin, it is advantageously noted that a recycled thermoplastic resin can be employed in making the core layer 12. It is to be understood that the recycled thermoplastic resin can include process recycle (e.g., scrap material generated during the manufacturing process) and can also include end user (e.g., consumer) recycle materials. Furthermore, since recycle materials generally cost less than non-recycled materials (e.g., "new" materials), a core layer 12 produced using recycled materials can advantageously cost less than a core layer 12 produced with new materials.

Possible thermoplastic resins that may be employed in core layer 12 include, but are not limited to, oligomers, polymers, ionomers, dendrimers, copolymers such as block copolymers, graft copolymers, star block copolymers, random copolymers, and combinations comprising at least one of the foregoing. Examples of such thermoplastic resins include, but are not limited to, polycarbonates, polystyrenes, copolymers of polycarbonate and styrene, polycarbonate-polybutadiene blends, blends of polycarbonate, copolyester polycarbonates, polyetherimides, polyimides, polypropylenes, acrylonitrile-styrene-butadiene, polyphenylene ether-polystyrene blends, polyalkylmethacrylates such as polymethylmethacrylates, polyesters, copolyesters, polyolefins such as polypropylenes and polyethylenes, high density polyethylenes, low density polyethylenes, linear low density polyethylenes, polyamides, polyamideimides, polyarylates, polyarylsulfones, polyethersulfones, polyphenylene sulfides, polytetrafluoroethylenes, polyethers, polyether ketones, polyether etherketones, polyacrylics, polyacetals, polybenzoxazoles, polyoxadiazoles, polybenzothiazinophenothiazines, polybenzothiazoles, polypyrazinoquinoxalines, polypyromellitimides, polyquinoxalines, polybenzimidazoles, polyoxindoles, polyoxoisoindolines, polydioxoisoindolines, polytriazines, polypyridazines, polypiperazines, polypyridines, polypiperidines, polytriazoles, polypyrazoles, polypyrrolidines, polycarboranes, polyoxabicyclononanes, polydibenzofurans, polyphthalides, polyacetals, polyanhydrides, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfones, polysulfonamides, polyureas, polyphosphazenes, polysilazzanes, polysiloxanes, polyvinylchlorides, and combinations comprising at least one of the foregoing.

More particularly, the thermoplastic resins can include, but are not limited to, polycarbonate resins (e.g., Lexan® resins, commercially available from the General Electric Company), polyphenylene ether-polystyrene blends (e.g., Noryl® resins, commercially available from the General Electric Company), polyetherimide resins (e.g., Ultem® resins, commercially available from General Electric Company), polybutylene terephthalate-polycarbonate blends (e.g., Xenoy® resins, commercially available from the General Electric Company), copolyestercarbonate resins (e.g. Lexan ® SLX resins, commercially available from the General Electric Company), and combinations comprising at least one of the foregoing resins. Even more particularly, the thermoplastic resins can include, but are not limited to, homopolymers and copolymers of a polycarbonate, a polyester, a polyacrylate, a polyamide, a polyetherimide, a polyphenylene ether, or a combination comprising at least one of the foregoing resins.

The opacity additive employed in the core layer 12 can be a colorant. Possible colorants include, but are not limited to, titanium dioxide, zinc sulfide, zinc oxide, barium sulfate, carbon black, iron oxides, cobalt aluminates, chrome oxides, nickel titanates, molybdenum oxides, chrome copper oxides, ultramarine blue, phthalocyanines, quinacridones, perylenes, anthraquinones, isoindolinones, and combinations comprising at least one of the foregoing.

The core layer 12 can further comprise an effective amount of a flame retardant such that core layer 12 and ultimately window shade 100 can meet Federal Aviation Regulation (FAR) 25.853 (air worthiness standard for aircraft compartment interiors), which sets the fire protection requirements for a compartment (cabin) interior of an aircraft, and more particularly can meet Appendix F, part I (b)(4) of FAR 25.853. In addition, the core layer 12 can have an effective type and amount of flame retardant such that the core layer and ultimately the window shade pass FAR Part 25.5, Appendix F, Part V, which is a test method to determine the smoke emissions characteristics of cabin materials, in accordance with testing method, ASTM F814-83.

Some possible flame retardants include, but are not limited to, halogenated resins (e.g., chlorinated resins, and the like), antimony oxide fillers, organic phosphates, and combinations comprising at least one of the foregoing. The flame retardant is non-brominated, e.g., comprises chlorinated resin(s) (such as sodium trichlorobenzene sulfonate sesquihydrate), potassium diphenylsulfone sulfonate (KSS), potassium perflurobutane sulfonate (KPFBS); also known as Rimer salt). For example, the sodium trichlorobenzene sulfonate sesquihydrate can be present in an amount of about 0.1 weight percent (wt%) to about 5 wt%, or more specifically, about 0.25 wt% to about 1.0 wt. % based on the total weight of the core layer 12. The core layer 12 can also comprise styrene acrylonitrile encapsulated polytetrafluoroethylene (e.g., Teflon®) e.g., in an amount of about 0.01 wt. % to about 2 wt. %, or specifically, about 0.1 wt% to about 0.8 wt%, based on the total weight of the core layer 12.

As briefly noted above, the core layer 12 can optionally further comprise an effective amount of an additive. Possible additives include, but are not limited to anti-oxidants, drip retardants, stabilizers (e.g., thermal, light, and the like), antistatic agents, plasticizers, impact modifiers, lubricants, reinforcing agents, ultra violet (UV) absorbers, and combinations comprising at least one of the foregoing. It is noted that the effective amounts of the additives can vary widely, but can generally be present in an amount of up to about 30 wt%, wherein the weight percent is based on a total weight of the core layer 12.

In an embodiment, core layer 12 can comprise a sufficient thickness and a sufficient amount and type of opacity additive to render the core layer opaque. For example, the core layer 12 can comprise a thickness of about 0.2 millimeters (mm) to about 5 mm, more particularly a thickness of about 0.3 mm to about 1 mm. When the opacity additive is carbon black, the core layer 12 can comprise about 0.1 weight percent (wt%) to about 10 about wt% carbon black, more particularly about 0.2 to about 2 wt%, wherein the weight percents are based on a total weight of the core layer 12.

Cap layer 14 can comprise an extrudable thermoplastic composition that is compatible with core layer 12, and optionally compatible with any optional layer (e.g., fourth layer 18) that is disposed in physical communication with the cap layer 14. More particularly, the cap layer 14 can comprise a thermoplastic resin, an aesthetic additive, and various optional other additives. Exemplary thermoplastic resins include, but are not limited to, those resins discussed above with regards to core layer 12. For example, the cap layer 14 can be formed from a polycarbonate resin, such as Lexan® resin, commercially available from General Electric Company. Additionally, it is noted that possible aesthetic additives can include those materials discussed above in relation to the opacity additive of the core layer 12. More particularly, in an embodiment, the aesthetic additive can comprise titanium dioxide.

The cap layer 14 can further comprise an effective amount of a flame retardant such that cap layer 14, and ultimately window shade 100, can meet Federal Aviation Regulation (FAR) 25.853 (air worthiness standard for aircraft compartment interiors), which sets the fire protection requirements for a compartment (cabin) interior of an aircraft, and more particularly can meet Appendix F, Part I (b)(4) of FAR 25.853. In addition, the cap layer 14 can have an effective type and amount of flame retardant such that the cap layer and ultimately the window shade pass FAR Part 25.5, Appendix F, Part V, which is a test method to determine the smoke emissions characteristics of cabin materials, in accordance with testing method, ASTM F814-83. Possible flame retardants and concentrations are set forth above with respect to the core layer 12, wherein the cap layer 14 can have the same or different flame retardant(s) than the core layer 12, as well as the same or different concentration of the flame retardant(s), with employing the same type of flame retardant, and optionally the same amount of flame retardant, useful in facilitating recycling and hence improving efficiency.

The cap layer 14 can comprise a sufficient thickness and a sufficient amount and type of aesthetic additive to cover core layer 12 such that the core layer 12 cannot be seen through cap layer 14. More particularly, embodiments are envisioned where the core layer 12 cannot be seen through the cap layer 14 even when the window shade is thermoformed using a deep draw method of up to about 50 mm, and the resulting shade is placed against sunlight. For example, the cap layer 14 can comprise a thickness of about 0.2 mm to about 5 mm, more particularly a thickness of about 0.25 mm to about 1 mm. When the aesthetic additive is titanium dioxide, the cap layer 14 can comprise about 1 wt% to about 25 wt% of the titanium dioxide, more particularly about 4 wt% to about 16 wt%, wherein the weight percents are based on a total weight of the cap layer 14.

With regards to optional layer(s) (e.g., third layer 16, fourth layer 18, and the like), it is noted that optional layer(s) can be disposed in physical communication with the core layer 12 and/or cap layer 14. It is briefly noted that these optional layers can act as a tie layer (adhesive layer) between, for example, core layer 12 and/or cap layer 14. Additionally/alternatively, these optional layers can comprise a surface of the window shade 100, e.g., for aesthetic purposes. Each optional layer can comprise an extrudable thermoplastic composition comprising a thermoplastic resin, such that each optional layer can be compatible with core layer 12, cap layer 14, and/or any other optional layer(s) that are disposed in physical communication with each given optional layer. Exemplary thermoplastic resins include, but are not limited to, those resins discussed above in relation to core layer 12. More particularly, the optional layers can each comprise a polyvinyl fluoride (PVF) resin (e.g., Tedlar®, commercially available from DuPont, Wilmington, DE). It is desirable to choose a material such that the window shade complies with Federal Aviation regulations. As briefly mentioned above, it is to be understood that the thickness of each layer, the number of layers, arrangement of layers, and the like, can vary in embodiments of the multi-layer film employed in making the window shade 100.

The multi-layer film (e.g., a film comprising core layer 12, cap layer 14, and optional layer(s)) that can be employed in making the window shade 100 can be produced by a number of possible methods. For example, core layer 12 and cap layer 14 can be co-extruded to form a dual layer film, which can optionally then be rolled (stored) to be subsequently processed (e.g., laminated with optional third and fourth layers 16,18). Alternatively, the dual layer film can be fed directly to a lamination area where the optional third and/or fourth layers (16, 18) can be laminated onto the dual layer film. In other embodiments, an extrusion-lamination method can be employed wherein the co-extruded core layer 12 and cap layer 14 can be laminated with optional third and fourth layers (16, 18) while the core layer 12 and the cap layer 14 are in a softened state. In yet another embodiment, the core layer 12, cap layer 14, third layer 16, and fourth layer 18 can all be co-extruded to form the multi-layer film. It is briefly noted with regards to co-extrusion of the multi-layers that a single manifold die or a multi-manifold die can be employed depending on the given properties (e.g., glass transition temperature (Tg)) for each thermoplastic resin in each layer).

Referring to Figure 2, a schematic view of an exemplary extrusion system, generally designated 200, is illustrated. It is briefly noted that while the extrusion system 200 is discussed in relation to the extrusion of a dual layer film 30 comprising the core layer 12 and cap layer 14, it is to be understood that the system can optionally be adapted for the extrusion of a multi-layer film (e.g., a film comprising core layer 12, cap layer 14, third layer 16 (Figure 1), and/or fourth layer 18 (Figure 1)). The system 200 can comprise a slot die 20, a first calendering roll 22, a second calendering roll 24, and pull rolls 26. A nip 28 (or gap) can be formed between the first calendering roll 22 and the second calendering roll 24. In this illustration, the slot die 20 is perpendicular to the first and second calendering rolls (22, 24). However, it is to be understood that other embodiments are envisioned where the slot die 20 is parallel to the first and second calendering rolls (22,24) and where the slot die 20 is disposed at an angle relative to the first and second calendering roll (22, 24).

In operation, a molten thermoplastic composition(s) (e.g., a thermoplastic composition that has been heated to a temperature greater than its glass transition temperature (T_{g})) can be extruded from slot die 20. The molten thermoplastic composition can then be passed through the nip 28, and cooled to form the dual layered film 30. Having passed the molten thermoplastic composition through the nip 28, the thermoplastic composition can be actively and/or passively cooled (e.g., to a temperature less than its T_{g}), and can then be passed through pull rolls 26. As discussed above, the cooled dual layer film 30 can optionally be rolled (stored) to be subsequently processed (e.g., laminated), or the dual layer film 30 can be feed directly to a lamination area.

In various embodiments, the calendering roll(s) (22, 24) can comprise a polished roll (e.g., a chrome or chromium plated roll). In other embodiments, the roll(s) can comprise a textured roll (e.g., a roll comprising an elastomeric material (e.g., an EPDM (ethylene propylene diamine monomer) based rubber)). Possible materials for the rolls include plastic, metal (e.g., chrome, stainless steel, aluminum, and the like), rubber (e.g., EPDM), ceramic materials, and the like. Furthermore, it is generally noted that the size of the rolls, material of the rolls, number of rolls, the film wrap around the rolls, and the like, can vary with the system employed. Further, it is noted that processing conditions (e.g., the temperature of the calendering rolls, the line speed, nip pressure, and the like) can also be varied.

In an embodiment, the dual layer film (e.g., 30) can be laminated with additional films (layers) to form a multi-layered film. Referring to Figure 3, an exemplary lamination system, generally designated 300, is illustrated. The system 300 can comprise a first laminating roll 32 and a second laminating roll 34 with a nip 36 formed between the first laminating roll 32 and the second laminating roll 34. Third layer 16, dual layer film 30, and fourth layer 18 can each be supplied to the nip 36 via rolls 38, 40, and 42 respectively. A resulting multi-layer film 44 can be produced when the final film cools. The multi-layer film 44 can optionally be rolled (stored) in a manner described above or alternatively the film 44 can be supplied directly to a thermoforming station where the multi-layer film 44 can be cut and thermoformed into window shade 100 (Figure 1).

It is generally noted that the term "thermoforming" is used to describe a method that comprises the sequential or simultaneous heating and forming of a material onto a mold, wherein the material is originally in the form of a sheet (e.g., film, layer, and the like) and is formed into a desired shape. Once the desired shape has been obtained, the formed article (e.g., window shade 100) is cooled below its glass transition temperature. For example, suitable thermoforming methods include, but are not limited to, mechanical forming (e.g., matched tool forming), membrane assisted pressure/vacuum forming, membrane assisted pressure/vacuum forming with a plug assist, and the like.

### EXAMPLE 1 (Comparative)

In this example, dual layer polycarbonate sheets comprising a core layer (e.g., 12) and cap layer (e.g., 14) were extruded. The thickness of each layer was varied, as well as the bromine concentration in the core layer and the titanium dioxide concentration in the cap layer. These concentrations were expressed as weight percents based on the total weight of each respective layer. For example, the weight percents of bromine and carbon black shown in Table 1 were based on the total weight of the core layer, with the balance being polycarbonate. The titanium dioxide concentration shown in Table 1 was based on the total weight of the cap layer, with the balance being polycarbonate.

For each sample, the dual layer film was evaluated for opacity. More particularly, each film was evaluated to determine if the film was opaque (i.e., no light was transmitted through the film) by ASTM D 1003-00. If the film was opaque a "Yes" was recorded for opacity, and a "No" was recorded if the film was not opaque. Similarly, the aesthetic appearance of dual layer films that were thermoformed with a 20 mm deep draw method was evaluated. If the core layer could be seen, the film did not meet the aesthetic test and a "No" was recorded. If the core layer could not be seen, the film met the aesthetic test and a "Yes" was recorded.

Furthermore, each sample was tested per the "vertical burn" test specified in FAR 25.853 for 12 seconds (s) and 60 seconds, as referenced in Appendix F, Part I. If a sample passed the test, a "pass" was recorded; and if sample failed the test, a "fail" was recorded. These results are summarized in Table 1.

In this example, dual layer polycarbonate sheets comprising a core layer (e.g., 12) and cap layer (e.g., 14) were extruded as described above. The thickness of each layer was varied, as well as the bromine concentration in the core layer and the titanium dioxide concentration in the cap layer. These concentrations were expressed as weight percents based on the total weight of each respective layer. For example, the weight percents of bromine and carbon black shown in Table 1 were based on the total weight of the core layer, with the balance being polycarbonate. The titanium dioxide concentration shown in Table 1 was based on the total weight of the cap layer, with the balance being polycarbonate.

For each sample, the dual layer film was evaluated for opacity. More particularly, each film was evaluated to determine if the film was opaque (i.e., no light was transmitted through the film) by ASTM D 1003-00, as set forth above. If the film was opaque a "Yes" was recorded for opacity, and a "No" was recorded if the film was not opaque. Similarly, the aesthetic appearance of dual layer films that were thermoformed with a 20 mm deep draw method was evaluated. If the core layer could be seen, the film did not meet the aesthetic test and a "No" was recorded. If the core layer could not be seen, the film met the aesthetic test and a "Yes" was recorded.

Furthermore, each sample was tested per the "vertical burn" test specified in FAR 25.853 for 12 seconds (s) and 60 seconds, as referenced in Appendix F, part I. If a sample passed the test, a "pass" was recorded; and if sample failed the test, a "fail" was recorded. These results are summarized in Table 1.

| Table 1 | | | | | | | | | |
|---|---|---|---|---|---|---|---|---|---|
| # | Core layer thickness inches (cm) | Bromine conc. (wt%) | Carbon black conc. (wt%) | Cap layer thickness inches (cm) | TiO₂ content (wt%) | Opaque (Y/N) | Aesthetic (Y/N) | 12 s vertical burn (P/F) | 60 s vertical burn (P/F) |
| 1 | 0.030 (0.076) | 10 | 1 | 0.012 (0.030) | 12 | Yes | Yes | Pass | Pass |
| 2 | 0.024 (0.061) | 10 | 1 | 0.018 (0.046) | 12 | Yes | Yes | Pass | Pass |
| 3 | 0.018 (0.046) | 10 | 1 | 0.025 (0.064) | 12 | Yes | Yes | Pass | Pass |
| 4 | 0.031 (0.079) | 7.5 | 1 | 0.015 (0.038) | 12 | Yes | Yes | Pass | Fail |
| 5 | 0.026 (0.066) | 5 | 1 | 0.020 (0.051) | 8 | Yes | Yes | Pass | Fail |
| 6 | 0.034 (0.083) | 7.5 | 1 | 0.012 (0.030) | 8 | Yes | No | Pass | Pass |
| 7 | 0.046 (0.12) | 7.5 | 1 | 0 | - | Yes | No | Pass | Pass |
| 8 | 0.015 (0.038) | 7.5 | 1 | 0 | - | No | No | Pass | Pass |

It was noted that the core layer comprised a carbon black concentration of 1 wt% and a bromine concentration greater than 5 wt% for each sample. Moreover, it was noted that samples that had a core layer comprising 10 wt% bromine and a cap layer that had a titanium dioxide concentration of 12 wt% were all found both opaque and aesthetic, and passed the 12 second vertical burn test and 60 second burn test.

### EXAMPLE 2

In Table 2, Sample #1 represents a dual layer polycarbonate sheet comprising a core layer (e.g., 12) and cap layer (e.g., 14) were extruded as described above. Sample #2 represents the dual layer film (e.g., 30) laminated with additional films (e.g., layers 16 and 18) to form a multi-layered film as described above.

Each sample was tested per the "vertical burn" test specified in FAR Sec. 25.853 for 60 seconds, as referenced in Appendix F, Part I. In the vertical burn test, three samples are tested, and the average of the three samples is reported. The sample compositions were coextruded with a black bottom layer (gauge 24 mil (0.61 millimeters (mm)) and white cap layer (gauge 18 mil (0.46 mm) are set forth in Tables 2 and 3. All weight percentages in Table 3 are based upon a total weight of the resin.

| Table 2 | | | | |
|---|---|---|---|---|
| Name | FR¹ in Black | FR in White | Lexan®² Resin Grade Black | Lexan® Resin Grade White |
| F1 | Yes | No | D070-701 | ML4351-80118 |
| F2 | Yes | Yes | ML9665-701 | RL7514-80118 |

| | | | | |
|---|---|---|---|---|
| ¹FR = Flame Retardant ²Lexan® polycarbonate (PC) resin is commercially available from GE Plastics. | | | | |

| Table 3 | | | |
|---|---|---|---|
| Lexan® Resin Grade | Color Additive | Resin Type | FR Additive |
| D070-701 | 1 wt% carbon black | PC | brominated PC; 10 wt% bromine |
| ML4351-80118 | 12 wt% TiO₂ | PC | none |
| ML9665-701 | 1 wt% carbon black | PC | 6 wt% sodium trichloro benzene sulfonates-sesquihydrate |
| | | | 0.2 wt% styrene encapsulated Teflon |
| RL7514-80118 | 12 wt% TiO₂ | PC | 6 wt% sodium trichloro benzene sulfonates-sesquihydrate |
| | | | 0.2 wt% styrene encapsulated Teflon |

The samples were exposed to flame for 60 seconds, and were not allowed to have a burn length longer than 15.2 cm (6 inches) Furthermore, each sample was tested per the "smoke density" test specified in FAR 25.5, as referenced in Appendix F, Part V. In the smoke density test, the optical smoke density is obtained by averaging a reading of three specimens, and shall not exceed 200. These results are summarized in Table 4.

| Table 4 | | | | |
|---|---|---|---|---|
| Sample | Burn Time (seconds) | Burn Length (inches) | Smoke Density (particles) | Result |
| 9 (comparative) (non-laminated F1) | 0 | 4 | 93 | Pass |
| 10 (non-laminated F2) | 2.6 | 1.7 | 66 | Pass |
| 11 (comparative) (laminated F1) | 0 | 4 | 241 | Fail |
| 12 (laminated F2) | 17 | 2 | 178 | Pass |

As can be seen from the results in Table 4, the bromine-free cap and core layers had a lower smoke density than the brominated cap and core layers (e.g., Sample 9 vs. Sample 10, respectively). Smoke density values of less than or equal to about 80 were attainable and even less than or equal to about 70 were attained with the cap and core layers. With respect to Samples 11 and 12, the brominated sample (Sample 11) failed the smoke density test once laminated with the optional layers, while the bromine-free sample (Sample 12), even as a laminated multi-layer article, continued to pass the smoke density test. Hence, the cap and core layers (comprising the chlorinated flame retardant) and laminated with polyvinyl fluoride (PVF) aesthetic layers continued to pass the smoke density test, while the other sample, with the brominated core layer and laminated (PVF) aesthetic layers failed.

Advantageously, the aircraft window shades and methods of making the window shades disclosed herein can offer a number of advantages over various other aircraft window shades and methods of making the window shades. More particularly, it is noted that the aircraft window shade can be made using recycled thermoplastic resins, which generally cost less than the same "new" materials, thereby lowering the overall material cost in making the aircraft window shade. For example, the core layer 12 can comprise about 0 wt% to about 100 wt% recycled thermoplastic resin, more particularly about 75 wt% to about 90 wt%, wherein weight percents are based on a total weight of the core layer 12. Also, the cap layer 14 can comprise about 0 wt% to about 100 wt% recycled thermoplastic resin, more particularly about 0 wt% to about 20 wt%, wherein weight percents are based on a total weight of the cap layer 14.

With regards to the methods of making, it is noted that methods disclosed herein extrude two or more layers, which allows a multi-layer film (e.g., dual layer film 30) to be made at a reduced cost compared to a multi-layer film where each and every layer is first extruded, stored (rolled), and then laminated together. In other words, without being bound by theory, as the method of making the multi-layer film becomes more and more streamlined (e.g., as process steps are eliminated), the overall time spend in making the multi-layer film can be reduced as well as the amount of equipment employed in the process can be reduced, thereby lowering the overall processing costs.

Furthermore, an unexpected advantage can be realized over other window shades that comprise an opaque board (e.g., a cellulose based material impregnated with carbon black) laminated on the thermoplastic layer. In this example, the carbon black can flake off the thermoplastic layer, which can create black dust in the aircraft cabin and reduce the useful life of the window shade. Without being bound by theory, the aircraft window shades disclosed herein do not have materials that readily flake off, since the opacity additive (e.g., carbon black) are extruded with a thermoplastic resin to form a core layer with the desired opacity. Additionally, it is note that by adding an aesthetic additive (e.g., titanium dioxide) to a cap layer (e.g., 14), which is co-extruded with the core layer (12), the overall thickness of the aircraft window shade can be reduced, thereby reducing the total amount of material employed in the aircraft window shade and reducing the total cost of the aircraft window shade. Furthermore, a reduction in the material employed can lead to a lighter weight aircraft window shade compared to a thicker window shade comprising the same materials.

Additionally, it is noted that advantages can also be recognized for applications were the multi-layer film is not employed as a window shade. For example, as noted above, recycled materials can be employed in making the multi-layer film, thereby reducing the overall cost of the multi-layer film compared to a multi-layer film made with new materials.

The terms "first," "second," and the like, "primary," "secondary," and the like, as used herein do not denote any order, quantity, or importance, but rather are used to distinguish one element from another, and the terms "a" and "an" herein do not denote a limitation of quantity, but rather denote the presence of at least one of the referenced item. Furthermore, the endpoints of all ranges directed to the same component or property are inclusive of the endpoint and independently combinable (e.g., ranges of "up to about 25 wt%, or, more specifically, about 5 wt% to about 20 wt%," is inclusive of the endpoints and all intermediate values of the ranges of "about 5 wt% to about 25 wt%," etc.). The modifier "about" used in connection with a quantity is inclusive of the stated value and has the meaning dictated by the context (e.g., includes the degree of error associated with measurement of the particular quantity).

While the invention has been described with reference to several embodiments thereof, it will be understood by those skilled in the art that various changes can be made and equivalents can be substituted for elements thereof without departing from the scope of the invention. In addition, many modifications can be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims.

## Claims

1. A multilayer article, comprising:
a core layer comprising a core layer thermoplastic resin and a core flame retardant additive; and
a cap layer comprising a cap layer thermoplastic resin and a cap flame retardant additive;
wherein the core layer comprises a sufficient amount of core flame retardant additive and the cap layer comprises a sufficient amount of cap flame retardant additive such that the multilayer article can pass a smoke density test as set forth in FAR 25.5, Appendix F, Part V;
wherein the core flame retardant additive and the cap flame retardant additive comprise a non-brominated flame retardant.

2. The multilayer article of Claim 1, wherein the core layer further comprises an opacity additive, and wherein the opacity additive is present in an amount of about 0.1 wt% to about 10 wt%, wherein weight percents are based on a total weight of the core layer.

3. The multilayer article of any of Claims 1-2, wherein the core layer comprises a sufficient amount of core flame retardant additive and the cap layer comprises a sufficient amount of cap flame retardant additive such that when formed into a multilayer article can pass at least a 60 second burn test as set forth in FAR 25.853, Appendix F, Part I (b)(4).

4. The multilayer article of any of Claims 1-3, further comprising a third layer comprising polyvinyl fluoride resin.

5. The multilayer article of Claim 4, further comprising a fourth layer, wherein the third layer is on one side of the multilayer article, and the fourth layer is on an opposite side of the multilayer article.

6. The multilayer article of any of Claims 1-5, further comprising a third layer disposed in physical communication with the core layer and a fourth layer disposed in physical communication with the cap layer.

7. The multilayer article of any of Claims 1-6, wherein the core flame retardant additive and the cap flame retardant additive comprise about 0.1 wt% to about 5 wt% sodium trichlorobenzene sulfonates, wherein weight percents are based on a total weight of the core layer.

8. The multilayer article of any of Claims 1-7, wherein the core flame retardant additive and the cap flame retardant additive further comprise about 0.01 wt% to about 2 wt% styrene acrylonitrile encapsulated polytetrafluoroethylene.

9. The multilayer article of any of Claims 1-8, wherein the cap layer further comprises about 1 wt% to about 25 wt% titanium dioxide, wherein weight percents are based on a total weight of the cap layer.

10. The multilayer article of any of Claims 1-9, wherein the core layer thermoplastic resin, the cap layer thermoplastic resin, or a combination of the foregoing comprise a material selected from the group consisting of polycarbonate, polyester, polyacrylate, polyamide, polyetherimide, polyphenylene ether, and a combination comprising at least one of the foregoing resins.

11. A method of making a multilayer article, comprising:
forming a core layer comprising a core layer thermoplastic resin and a core non-brominated flame retardant additive;
forming a cap layer comprising a cap layer thermoplastic resin, a cap non-brominated flame retardant additive; and
thermoforming the multi-layer article;
wherein the core layer comprises a sufficient amount of core flame retardant additive and the cap layer comprises a sufficient amount of cap flame retardant additive, such that the multilayer article can pass a smoke density test as set forth in FAR 25.5 Appendix F, Part V, wherein the core flame retardant additive and the cap flame retardant additive comprise a non-brominated flame retardant.

12. The method of Claim 11, wherein the forming of the cap layer and the forming of the core layer comprise coextruding the core layer and the cap layer.

13. The method of any of Claims 11-12, further comprising laminating a third layer to the core layer, and laminating a fourth layer to the cap layer.

14. The method of any of Claims 11-12, further comprising coextruding a third layer and a fourth layer, wherein the core layer and the cap layer are located between the third layer and the fourth layer.

15. The method of any of Claims 13-14, wherein at least one of the third or fourth layers comprise a polyvinyl fluoride resin.

## Patentansprüche

1. Mehrlagiger Gegenstand umfassend:
eine Kernschicht enthaltend ein thermoplastisches Kernschicht-Harz und einen flammenhemmenden Kern-Zusatz; und
eine Deckschicht enthaltend ein thermoplastisches Deckschicht-Harz und einen flammenhemmenden Deck-Zusatz;
wobei die Kernschicht einen ausreichenden Anteil an flammenhemmenden Kern-Zusatz enthält und die Deckschicht einen ausreichenden Anteil an flammenhemmenden Deck-Zusatz enthält, so dass der mehrlagige Gegenstand einen Rauchdichtetest, wie in FAR 25.5, Anhang F, Teil V dargelegt, bestehen kann;
wobei der flammenhemmende Kern-Zusatz und der flammenhemmende Deck-Zusatz ein nicht-bromiertes Flammschutzmittel enthalten.

2. Mehrlagiger Gegenstand gemäß Anspruch 1, wobei die Kernschicht weiter einen Opazitätszusatz enthält, und wobei der Opazitätszusatz in einem Anteil von ungefähr 0,1 Gew.-% bis ungefähr 10 Gew.-% vorhanden ist, wobei Gewichtsprozent auf ein Gesamtgewicht der Kernschicht bezogen sind.

3. Mehrlagiger Gegenstand gemäß einem der Ansprüche 1 - 2, wobei die Kernschicht einen ausreichenden Anteil an flammenhemmenden Kern-Zusatz enthält und die Deckschicht einen ausreichenden Anteil an flammenhemmenden Deck-Zusatz enthält, so dass, wenn sie zu einem mehrlagigen Gegenstand geformt sind, dieser zumindest einen 60 Sekunden Brenntest, wie in FAR 25.853, Anhang F, Teil I(b)(4) dargelegt, bestehen kann.

4. Mehrlagiger Gegenstand gemäß einem der Ansprüche 1 - 3, weiter umfassend eine dritte Schicht, die Polyvinylfluoridharz enthält.

5. Mehrlagiger Gegenstand gemäß Anspruch 4, weiter umfassend eine vierte Schicht, wobei die dritte Schicht auf einer Seite des mehrlagigen Gegenstandes ist, und die vierte Schicht auf einer gegenüberliegenden Seite des mehrlagigen Gegenstandes ist.

6. Mehrlagiger Gegenstand gemäß einem der Ansprüche 1 - 5, weiter umfassend eine dritte Schicht welche in physischer Verbindung mit der Kernschicht angeordnet ist und einer vierten Schicht welche in physischer Verbindung mit der Deckschicht angeordnet ist.

7. Mehrlagiger Gegenstand gemäß einem der Ansprüche 1 - 6, wobei der flammenhemmende Kern-Zusatz und der flammenhemmende Deck-Zusatz ungefähr 0,1 Gew.-% bis ungefähr 5 Gew.-% Natrium-Trichlorobenzen-Sulfonate enthalten, wobei Gewichtsprozent auf ein Gesamtgewicht der Kernschicht bezogen sind.

8. Mehrlagiger Gegenstand gemäß einem der Ansprüche 1 - 7, wobei der flammenhemmende Kern-Zusatz und der flammenhemmende Deck-Zusatz weiter ungefähr 0,01 Gew.-% bis ungefähr 2 Gew.-% Styrol-Acrylnitril ummanteltes Polytetrafluoroethylen enthalten.

9. Mehrlagiger Gegenstand gemäß einem der Ansprüche 1 - 8, wobei die Deckschicht weiter ungefähr 1 Gew.-% bis ungefähr 25 Gew.-% Titaniumdioxid enthält, wobei Gewichtsprozent auf ein Gesamtgewicht der Deckschicht bezogen sind.

10. Mehrlagiger Gegenstand gemäß einem der Ansprüche 1 - 9, wobei das thermoplastische Kernschicht-Harz, das thermoplastische Deckschicht-Harz, oder eine Kombination der Vorangehenden ein Material enthalten welches ausgewählt ist aus der Gruppe bestehend aus Polycarbonat, Polyester, Polyacrylat, Polyamid, Polyetherimid, Polyphenylen-Ether, und einer Kombination umfassend zumindest eines der vorangehenden Harze.

11. Verfahren zum Herstellen eines mehrlagigen Gegenstands, umfassend:
Formen einer Kernschicht welche ein thermoplastisches Kernschicht-Harz und einen nicht-bromierten flammenhemmenden Kern-Zusatz enthält;
Formen einer Deckschicht welche ein thermoplastisches Deckschicht-Harz, einen nicht-bromierten flammenhemmenden Deck-Zusatz enthält; und
Thermoformen des mehrlagigen Gegenstands;
wobei die Kernschicht einen ausreichenden Anteil an flammenhemmenden Kern-Zusatz enthält und die Deckschicht einen ausreichenden Anteil an flammenhemmenden Deck-Zusatz enthält, so dass der mehrlagige Gegenstand einen Rauchdichtetest, wie in FAR 25.5, Anhang F, Teil V dargelegt, bestehen kann,
wobei der flammenhemmende Kern-Zusatz und der flammenhemmende Deck-Zusatz ein nicht-bromiertes Flammschutzmittel enthalten.

12. Verfahren nach Anspruch 11, wobei das Formen der Deckschicht und das Formen der Kernschicht das Koextrudieren der Kernschicht und der Deckschicht enthalten.

13. Verfahren gemäß einem der Ansprüche 11 - 12, weiter umfassend das Laminieren einer dritten Schicht an die Kernschicht, und Laminieren einer vierten Schicht an die Deckschicht.

14. Verfahren gemäß einem der Ansprüche 11 - 12, weiter umfassend das Koextrudieren einer dritten Schicht und einer vierten Schicht, wobei die Kernschicht und die Deckschicht zwischen der dritten Schicht und der vierten Schicht gelegen sind.

15. Verfahren gemäß einem der Ansprüche 13 - 14, wobei zumindest eine der ersten oder vierten Schichten ein Polyvinylfluoridharz enthält.

## Revendications

1. Article multicouche, comprenant :
une couche d'âme comprenant une résine thermoplastique de couche d'âme et un additif ignifugeant d'âme; et
une couche de coiffe comprenant une résine thermoplastique de couche de coiffe et un additif ignifugeant de coiffe ;
dans lequel la couche d'âme comprend une quantité suffisante d'additif ignifugeant d'âme et la couche de coiffe comprend une quantité suffisante d'additif ignifugeant de coiffe de telle sorte que l'article multicouche peut passer un test de densité de fumée tel que présenté dans FAR 25.5, Appendice F, Partie V ;
dans lequel l'additif ignifugeant d'âme et l'additif ignifugeant de coiffe comprennent un ignifugeant non bromé.

2. Article multicouche selon la revendication 1, dans lequel la couche d'âme comprend en outre un additif d'opacité, et dans lequel l'additif d'opacité est présent en une quantité d'environ 0,1 % en poids à environ 10 % en poids, dans lequel les pourcentages en poids sont basés sur un poids total de la couche d'âme.

3. Article multicouche selon l'une quelconque des revendications 1 à 2, dans lequel la couche d'âme comprend une quantité suffisante d'additif ignifugeant d'âme et la couche de coiffe comprend une quantité suffisante d'additif ignifugeant de coiffe de telle sorte que lorsqu'elles sont formées en un article multicouche, celui-ci peut passer au moins un test de combustion de 60 secondes tel que présenté dans FAR 25.853, Appendice F, Partie I (b)(4).

4. Article multicouche selon l'une quelconque des revendications 1 à 3, comprenant en outre une troisième couche comprenant une résine de fluorure de polyvinyle.

5. Article multicouche selon la revendication 4, comprenant en outre une quatrième couche, dans lequel la troisième couche est sur un côté de l'article multicouche, et la quatrième couche est sur un côté opposé de l'article multicouche.

6. Article multicouche selon l'une quelconque des revendications 1 à 5, comprenant en outre une troisième couche disposée en communication physique avec la couche d'âme et une quatrième couche disposée en communication physique avec la couche de coiffe.

7. Article multicouche selon l'une quelconque des revendications 1 à 6, dans lequel l'additif ignifugeant d'âme et l'additif ignifugeant de coiffe comprennent environ 0,1 % en poids à environ 5 % en poids de trichlorobenzène sulfonates de sodium, dans lequel les pourcentages en poids sont basés sur un poids total de la couche d'âme.

8. Article multicouche selon l'une quelconque des revendications 1 à 7, dans lequel l'additif ignifugeant d'âme et l'additif ignifugeant de coiffe comprennent en outre environ 0,01 % en poids à environ 2 % en poids de polytétrafluoréthylène encapsulé dans du styrène acrylonitrile.

9. Article multicouche selon l'une quelconque des revendications 1 à 8, dans lequel la couche de coiffe comprend en outre environ 1 % en poids à environ 25 % en poids de dioxyde de titane, dans lequel les pourcentages en poids sont basés sur un poids total de la couche de coiffe.

10. Article multicouche selon l'une quelconque des revendications 1 à 9, dans lequel la résine thermoplastique de couche d'âme, la résine thermoplastique de couche de coiffe, ou une combinaison de ce qui précède comprennent un matériau choisi dans le groupe constitué de polycarbonate, polyester, polyacrylate, polyamide, polyétherimide, éther de polyphénylène, et une combinaison comprenant au moins une des résines qui précèdent.

11. Procédé de fabrication d'un article multicouche, comprenant :
la formation d'une couche d'âme comprenant une résine thermoplastique de couche d'âme et un additif ignifugeant non bromé d'âme ;
la formation d'une couche de coiffe comprenant une résine thermoplastique de couche de coiffe, un additif ignifugeant non bromé de coiffe; et
le thermoformage de l'article multicouche ;
dans lequel la couche d'âme comprend une quantité suffisante d'additif ignifugeant d'âme et la couche de coiffe comprend une quantité suffisante d'additif ignifugeant de coiffe de telle sorte que l'article multicouche peut passer un test de densité de fumée tel que présenté dans FAR 25.5, Appendice F, Partie V ;
dans lequel l'additif ignifugeant d'âme et l'additif ignifugeant de coiffe comprennent un ignifugeant non bromé.

12. Procédé selon la revendication 11, dans lequel la formation de la couche de coiffe et la formation de la couche d'âme comprennent la coextrusion de la couche d'âme et de la couche de coiffe.

13. Procédé selon l'une quelconque des revendications 11 à 12, comprenant en outre la stratification d'une troisième couche sur la couche d'âme, et la stratification d'une quatrième couche sur la couche de coiffe.

14. Procédé selon l'une quelconque des revendications 11 à 12, comprenant en outre la coextrusion d'une troisième couche et d'une quatrième couche, dans lequel la couche d'âme et la couche de coiffe sont situées entre la troisième couche et la quatrième couche.

15. Procédé selon l'une quelconque des revendications 13 à 14, dans lequel au moins l'une parmi les troisième ou quatrième couches comprend une résine de fluorure de polyvinyle.
